# EUROPEAN PATENT APPLICATION

(11) **EP 1 793 576 A1**
(43) Date of publication of application: **06.06.2007**
(21) Application number: 06254381.4
(22) Date of filing: 21.08.2006
(51) Int. Cl.: H04M 3/51, H04M 3/523

(54) **Method and apparatus for dynamically adjusting resource configuration in a call centre**

(30) Priority: 30.11.2005 US 291106
(71) Applicant: AVAYA TECHNOLOGY LLC, Basking Ridge, NJ 07920 (US)
(72) Inventor: Patakula, Balaji, Parlin, NJ 08859 (US); Qutub, Sami, Freehold, NJ 07728 (US); Sitkowski, Rafal, Old Bridge, NJ 08857 (US); Sokoler, David, Colts Neck, NJ 07722 (US)
(74) Representative: Williams, David John

(57) **Abstract**

Methods and apparatus are provided for dynamically adjusting the configuration of one or more resources in a resource allocation system. One or more capabilities of a resource managed by a resource allocation system can be dynamically updated. Once it is determined that the resource has become available, the resource can be assigned, in response to the determination, to the request based on the one or more updated capabilities. The capability updates can be received, for example, from an external system or can be based on one or more rules that are triggered based on predefined conditions.

## Description

### Field of the Invention

The present invention relates generally to the allocation of resources, and more particularly, to methods and apparatus for dynamically adjusting the configuration of one or more resources in a resource allocation system.

### Background of the Invention

For many enterprise applications, finite resources must be allocated among a number of requests for such resources. In a network call routing system, for example, incoming calls must often be routed to an appropriate call center agent at one or more local or remote call centers. A call center often handles telephone calls for an enterprise. Typically, the telephone calls handled by a call center are incoming calls from present or potential customers of the enterprise. The incoming calls are generally distributed among a number of agents within the call center who are each trained to handle certain types of incoming calls.

A call center will normally be capable of handling many different types of received calls. For example, a call center may receive calls relating to each of a multitude of different products, product types, or product families sold by the corresponding enterprise. Alternatively, or in addition, a call center may handle calls relating to different services or information dissemination functions provided by the enterprise. For example, the services and functions may include taking product orders, providing customer service, providing pricing and/or availability information, or any of a variety of other functions. The types of calls that are supported by a call center are commonly referred to as the "skills" of the call center. Each skill typically has an associated queue for storing received calls until an appropriate agent is available to process the call.

Likewise, each agent employed by the call center will have a number of capabilities that allow the individual agents to be matched to the received calls that have been enqueued in the various queues. For example, individual agents may be qualified to support various products or services offered by the enterprise, and may be capable of working with particular media types, such as telephone calls and emails, and languages, such as English and Spanish. Typically, the capabilities of each agent are statically configured. It is often desirable, however, to update the configuration of agents and other resources based on one or more business goals, or internal or external triggers.

A need therefore exists for methods and apparatus for dynamically adjusting the configuration of agents and other resources in a resource allocation system.

### Summary of the Invention

Generally, methods and apparatus are provided for dynamically adjusting the configuration of one or more resources in a resource allocation system. According to one aspect of the invention, one or more capabilities of a resource managed by a resource allocation system can be dynamically updated. Once it is determined that the resource has become available, the resource can be assigned, in response to the determination, to the request based on the one or more updated capabilities. The capability updates can be received, for example, from an external system or can be based on one or more rules that are triggered based on predefined conditions.

A more complete understanding of the present invention, as well as further features and advantages of the present invention, will be obtained by reference to the following detailed description and drawings.

### Brief Description of the Drawings

FIG. 1 shows an illustrative call center in which the present invention may be implemented;
FIG. 2 shows a simplified block diagram of one possible implementation of the automatic call distribution system of FIG. 1; and
FIG. 3 is a flow chart describing an exemplary implementation of a resource allocation process incorporating features of the present invention.

### Detailed Description

The present invention provides methods and apparatus for dynamically adjusting the configuration of agents and other resources in a resource allocation system. In particular, the present invention allows the capabilities of individual agents to be dynamically adjusted.

While the invention is generally illustrated in conjunction with the processing of calls in an exemplary call center, the invention is not limited to use with any particular type of call center or communication processing application. For example, the invention is applicable to the processing of both incoming and outgoing communications. The disclosed techniques can be used with automatic call distribution (ACD) systems, telemarketing systems, private-branch exchange (PBX) systems, computer-telephony integration (CTI)-based systems, as well as in combinations of these and other types of call centers. A call center in accordance with the invention may be configured using any type of network infrastructure, such as, e.g., asynchronous transfer mode (ATM), local area networks, wide area networks or Internet Protocol (IP) networks. The term "call center" as used herein is thus intended to include any type of ACD system, telemarketing system or other communication system that processes calls or other service requests, including voice calls, video calls, multimedia calls, e-mail, faxes, text chat or voice messages as well as various portions or combinations of these and other types of communications. The term "call" as used herein is intended to include any of the above-noted types of communications as well as portions or combinations of these and other communications.

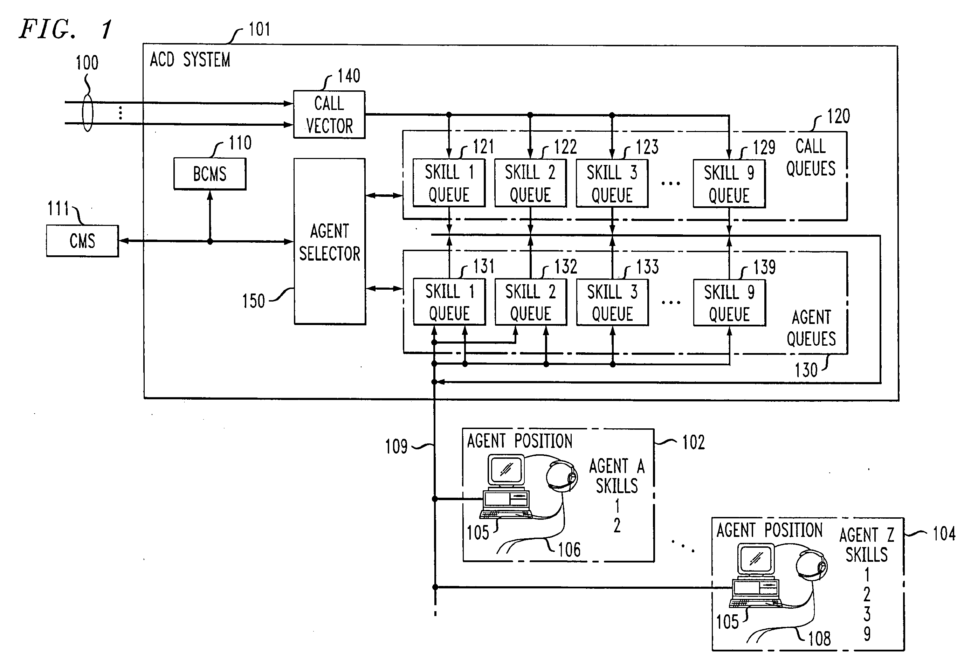

FIG. 1 shows an illustrative call center in which the present invention may be implemented. The call center includes a number of telephone lines and/or trunks 100 selectively interconnected with a plurality of agent positions 102-104 via an ACD system 101. Each agent position 102-104 includes a voice-and-data terminal 105 for use by a corresponding agent 106-108 to handle calls. The terminals 105 are connected to ACD system 101 by a voice-and-data transmission medium 109. The ACD system 101 includes a conventional basic call management system (BCMS) 110, and is also connected to a conventional external call management system (CMS) 111. The BCMS 110 and CMS 111 gather call records, call center statistics and other information for use in managing the call center, generating call center reports, and performing other functions. In alternative embodiments, the functions of the BCMS 110 and the CMS 111 may be provided using a single call management system internal or external to the ACD system 101.

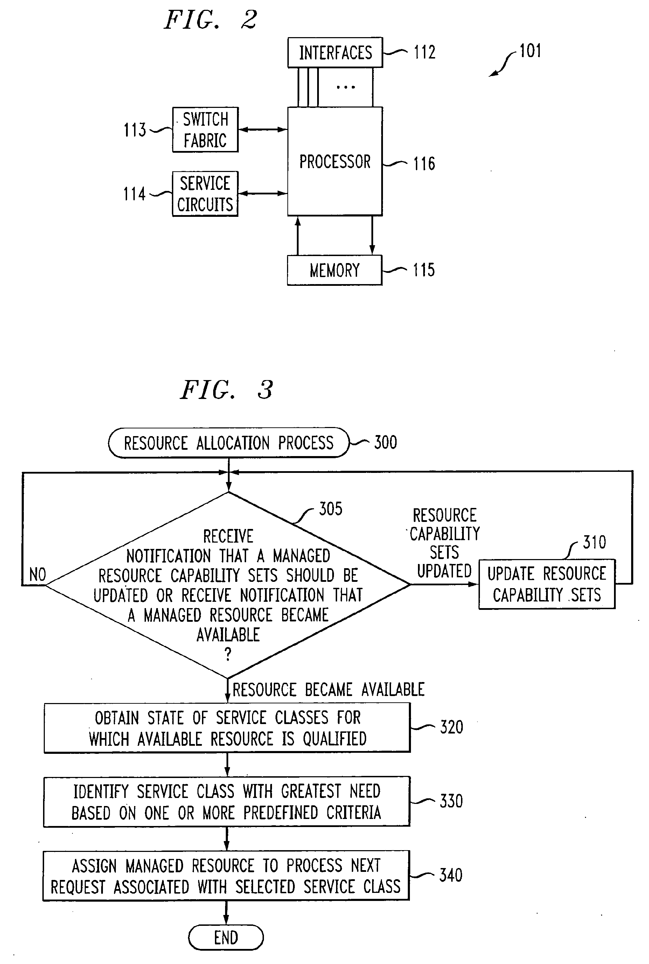

The ACD system 101 may be implemented in a manner similar to, for example, the Avaya Communication Manager^{™} from Avaya Inc. of Basking Ridge, NJ or the Definity^{™} PBX-based ACD system from Lucent Technologies. FIG. 2 shows a simplified block diagram of one possible implementation of the ACD system 101. The system 101 as shown in FIG. 2 is a stored-program-controlled system that includes interfaces 112 to external communication links, a communications switching fabric 113, service circuits 114 (e.g., tone generators and announcement circuits), a memory 115 for storing control programs and data, and a processor 116 (e.g., a microprocessor, a CPU, a computer, etc. or various portions or combinations thereof) for executing the stored control programs to control the interfaces and the fabric, to provide automatic call distribution functionality, and to provide storage of e-mails, faxes and other communications.

Referring again to FIG. 1, exemplary data elements stored in the memory 115 of ACD system 101 include a set of call queues 120 and a set of agent queues 130. Each call queue 121-129 in the set of call queues 120 corresponds to a different agent skill, as does each agent queue 131-139 in the set of agent queues 130. As in a conventional system, calls are prioritized, and may be, for example, enqueued in individual ones of the call queues 120 in their order of priority, or enqueued in different ones of a plurality of call queues that correspond to a skill and each one of which corresponds to a different priority.

Similarly, each agent's skills are prioritized according to his or her level of expertise in that skill, and agents may be, for example, enqueued in individual ones of the agent queues 130 in their order of expertise level, or enqueued in different ones of a plurality of agent queues that correspond to a skill and each one of which corresponds to a different expertise level in that skill. It should be noted that the invention can also be implemented in systems using a wide variety of other types of queue arrangements and queuing techniques.

According to one aspect of the invention, the skills or other configurable characteristics of each agent can be dynamically adjusted. In particular, the present invention allows the capabilities of individual agents to be dynamically adjusted.

The ACD system 101 further includes a call vector 140. The call vector 140 may be one of a number of different types of stored control programs implemented in system 101. Calls incoming to the call center on lines or trunks 100 are assigned by call vector 140 to different call queues 121-129 based upon the agent skill that they require for proper handling. Agents 106-108 who are available for handling calls are assigned to agent queues 131-139 based upon the skills which they possess. An agent may have multiple skills, and hence may be assigned to multiple agent queues 13.1-139 simultaneously. Such an agent is referred to herein as a "multi-skill agent." Furthermore, an agent may have different levels of skill expertise (e.g., different skill levels in a multi-level scale or primary (P) and secondary (S) skills), and hence may be assigned to different agent queues 131-139 at different expertise levels.

Call vectoring is described in greater detail in Definity^{™} Communications System Generic 3 Call Vectoring/Expert Agent Selection (EAS) Guide, AT&T Publication No. 555-230-520, Issue 3, Nov. 1993, which is incorporated by reference herein. Skills-based ACD techniques are described in greater detail in, for example, U.S. Pat. No. 5,206,903 issued Apr. 27, 1993 in the name of inventors J. E. Kohler et al. and entitled "Automatic Call Distribution Based on Matching Required Skills with Agents Skills," which is incorporated by reference herein.

Another program executing in ACD system 101 is an agent selector 150. Selector 150 may be implemented in software stored either in the memory 115 of system 101, in a peripheral memory (e.g., a disk or CD-ROM) of system 101, or in any other type of computer readable medium associated with system 101, and executed by processor 116 or other suitable processing hardware associated with the ACD system 101. Selector 150 in this exemplary embodiment implements conventional techniques for providing an assignment between available calls and available agents. The conventional techniques implemented by selector 150 are well known in the art and will not be further described herein. It should be noted that these functions could be implemented in other elements of the ACD system 101, or using a combination of a number of different elements in such a system.

Further details regarding call processing in a system such as ACD system 101 can be found in, for example, U.S. Pat. No. 5,905,793 in the name of inventors A. D. Flockhart et al. and entitled "Waiting-Call Selection Based on Anticipated Wait Times," and U.S. Pat. No. 6,192,122, in the name of inventors A. D. Flockhart et al. and entitled "Call Center Agent Selection that Optimizes Call Wait Times," both of which are incorporated by reference herein.

In accordance with the present invention, the call center of FIG. 1 is configured to dynamically adjust the configuration of agents and other resources in a resource allocation system. In particular, the present invention allows the capabilities of individual agents to be dynamically adjusted.

FIG. 3 is a flow chart describing an exemplary implementation of a resource allocation process 300 incorporating features of the present invention. As shown in FIG. 3, the exemplary resource allocation process 300 is initiated during step 305 upon receipt of (i) a notification that capability sets of a managed resource should be updated, or (ii) a notification that a managed resource became available.

If it is determined during step 305 that capability sets of one or more managed resources, such as call center agents, should be updated, then the updates are implemented during step 310. It is noted that the capabilities can be updated in this manner on-the-fly by an administrator of the resource allocation system. In a further variation, the capabilities can be dynamically updated by one or more rules that are triggered upon one or more predefined conditions. For example, a resource allocation system can have a rule to ensure that a predefined number of agents are available to service certain queues 120, and in the event there are an insufficient number of agents, the capabilities of the available agents can be automatically adjusted to ensure that the rule is satisfied. In addition, as discussed below, the capabilities can be dynamically updated by a work flow management system.

If it is determined during step 305 that a managed resource has become available, then the resource allocation process 300 proceeds during step 320. For example, in an exemplary call center implementation, an agent may become available upon the successful completion of a prior call. Once it is determined during step 305 that a managed resource has become available, the available managed resource is matched with a request during steps 320 through 340.

After a resource becomes available, the exemplary resource allocation process 300 obtains the state of the service classes for which the managed resource is qualified (i.e., capable) during step 320. The state of service classes may be obtained, for example, using a publish/subscribe mechanism and may be cached by each resource manager.

In one exemplary embodiment, each service class can progress through multiple states. Each state indicates that the service class is in greater need than the previous state. For example, each state indicates how close the service class is to exceeding its target or how much the service class has progressed beyond its target. It is noted that the "greatest need" generally does not mean that the customer is in the greatest need to speak to an agent. The "greatest need" is based on one or more predefined criteria for selecting which queue 120 should be chosen to meet or preserve goals for customer service and to give customers the desired level of service.

In one exemplary embodiment, one of the following five service class states can be assigned to a queue 120 to indicate the current performance level: over served, within range, future jeopardy, current jeopardy, over threshold. For example, the following table shows the service class states for each of the exemplary call queues 120 shown in FIG. 1:

| Queue No. | Queue Type | Current Service Class State |
|---|---|---|
| Queue 1 | Non-Specific | Within Range |
| Queue 2 | Specific | Within Range |
| Queue 3 | Non-Specific | Over Threshold |
| Queue 4 | Non-Specific | Over Served |
| Queue 5 | Specific | Over Threshold |
| Queue 6 | Non-Specific | Within Range |
| Queue 7 | Non-Specific | Current Jeopardy |
| Queue 8 | Non-Specific | Future Jeopardy |
| Queue 9 | Specific | Within Range |

The service class with the greatest need is identified during step 330 based on one or more predefined criteria. In one exemplary implementation, when multiple service classes are in a state that indicates the greatest need, the resource allocation process 300 prioritizes the assignment of requests to local resources. If the service classes in greatest need include at least one local service class, a local service class is selected. If no local service classes are in greatest need, a remote service class with the greatest need is selected. If two or more remote service classes are in the same state, services classes are selected, for example, based on a round-robin technique, selecting the remote service class with the oldest time stamp. The logical resource manager optionally applies a time stamp to a remote service class when an agent offered for that service class has been accepted.

Once the service class with the greatest need is selected during step 330, the managed resource is assigned during step 340 to process the next request associated with the selected service class. For example, if the service class with the greatest need is a local service class, the request can be obtained from the associated queue 120. If, however, the service class with the greatest need is a remote service class, then the resource can be offered to a remote resource manager, to be matched to work queued at the remote service class.

It is noted that the matching of requests to managed resources can be restricted to resources in a specific location or region, for example, by adding a location qualifier to the service classes. The location qualifier can apply to only one site, or to a region (group of sites). The location qualifier restricts contacts in the service class to be delivered only to that location. For example, a location qualifier can ensure that email contacts received in given country are only handled by agents in the same country.

As indicated above, a call center agent can have one or more capability sets. Each capability set should include the same qualifiers as a service class that the agent can handle. The capability sets are used to match a contact with the agent. If the qualifiers in a capability set match the qualifiers in the service class for a contact, the resource allocation process 300 matches the contact to the agent.

As previously indicated, the resource allocation process 300 can receive automatic updates to modify resource capability sets from any external system during step 310. In one exemplary implementation, the present invention allows the resource allocation system to be integrated with an external system, such as a workforce management system. One example of utilizing this solution with a workforce manager system is to use the vacation calendar of the workforce manager system to automatically modify the resource capability sets when an agent or another resource is about to take a vacation. The modified resource capability sets can allow the agent to focus on servicing those requests that need to be resolved before the vacation or other absence of the agent, such as those requests that the agent is specially capable of handing. For example, the enterprise may desire the agent to clear out all email requests from the queues before a vacation. Thus, the capabilities of the agent can be adjusted so that email requests are prioritized.

In addition, rules can be established to automatically vary the capability sets according to some schedule, such as time of day. For example, a rule can be established to have one or more agents process non-native language calls in the morning (when the agent may be considered to be more fresh and alert) and native language calls in the afternoon. Likewise, to improve efficiency, and prevent agents from switching among various applications, further rules can be established to have one or more agents process a given media type, such as emails, in the morning, and another media type in the afternoon.

### System and Article of Manufacture Details

As is known in the art, the methods and apparatus discussed herein may be distributed as an article of manufacture that itself comprises a computer readable medium having computer readable code means embodied thereon. The computer readable program code means is operable, in conjunction with a computer system, to carry out all or some of the steps to perform the methods or create the apparatuses discussed herein. The computer readable medium may be a recordable medium (e.g., floppy disks, hard drives, compact disks, or memory cards) or may be a transmission medium (e.g., a network comprising fiber-optics, the world-wide web, cables, or a wireless channel using time-division multiple access, code-division multiple access, or other radio-frequency channel). Any medium known or developed that can store information suitable for use with a computer system may be used. The computer-readable code means is any mechanism for allowing a computer to read instructions and data, such as magnetic variations on a magnetic media or height variations on the surface of a compact disk.

The computer systems and servers described herein each contain a memory that will configure associated processors to implement the methods, steps, and functions disclosed herein. The memories could be distributed or local and the processors could be distributed or singular. The memories could be implemented as an electrical, magnetic or optical memory, or any combination of these or other types of storage devices. Moreover, the term "memory" should be construed broadly enough to encompass any information able to be read from or written to an address in the addressable space accessed by an associated processor. With this definition, information on a network is still within a memory because the associated processor can retrieve the information from the network.

It is to be understood that the embodiments and variations shown and described herein are merely illustrative of the principles of this invention and that various modifications may be implemented by those skilled in the art without departing from the scope and spirit of the invention.

## Claims

1. A method for allocating a resource to a request, comprising:
dynamically receiving an update to one or more capabilities of said resource;
determining that said resource has become available; and
assigning, in response to said determination, said resource to said request based on said one or more updated capabilities.

2. The method of claim 1, wherein said update to said one or more capabilities of said resource are received from an external system.

3. The method of claim 1, wherein said update to said one or more capabilities of said resource are based on one or more rules that are triggered based on one or more predefined conditions.

4. The method of claim 1, wherein said assigning step further comprises the step of evaluating a need of one or more service classes based on one or more predefined criteria.

5. The method of claim 1, wherein said assigning step further comprises the step of evaluating a state of a service class associated with said request.

6. The method of claim 5, further comprising the step of maintaining state information for a plurality of service classes.

7. The method of claim 1, further comprising the step of storing said request in a queue associated with a given service class.

8. The method of claim 1, wherein said assigning step further comprises the step of assigning said resource to a service class for which said resource is capable.

9. The method of claim 1, wherein said determining step further comprises the step of determining that said resource has become available based on one or more predefined criteria.

10. The method of claim 1, wherein said resource is one of a plurality of call agents associated with a call center.

11. A system for allocating a resource to a request, comprising:
a memory; and
at least one processor, coupled to the memory, operative to:
dynamically receive an update to one or more capabilities of said resource;
determine that said resource has become available; and
assign, in response to said determination, said resource to said request based on said one or more updated capabilities.

12. The system of claim 11, wherein said update to said one or more capabilities of said resource are received from an external system.

13. The system of claim 11, wherein said update to said one or more capabilities of said resource are based on one or more rules that are triggered based on one or more predefined conditions.

14. The system of claim 11, wherein said processor is further configured to evaluate a state of a service class associated with said request.

15. The system of claim 14, wherein said processor is further configured to maintain state information for a plurality of service classes.

16. The system of claim 11, wherein said processor is further configured to store said request in a queue associated with a given service class.

17. The system of claim 11, wherein said processor is further configured to assign said resource to a service class for which said resource is capable.

18. The system of claim 11, wherein said processor is further configured to determine that said resource has become available based on one or more predefined criteria.

19. An article of manufacture for allocating a resource to a request, comprising a machine readable medium containing one or more programs which when executed implement the steps of:
dynamically receiving an update to one or more capabilities of said resource;
determining that said resource has become available; and
assigning, in response to said determination, said resource to said request based on said one or more updated capabilities.

20. The article of manufacture of claim 19, wherein said update to said one or more capabilities of said resource are received from an external system.

21. The article of manufacture of claim 19, wherein said update to said one or more capabilities of said resource are based on one or more rules that are triggered based on one or more predefined conditions.
